# EUROPEAN PATENT APPLICATION

(11) **EP 4 717 937 A1**
(43) Date of publication of application: **01.04.2026**
(21) Application number: 24892686.7
(22) Date of filing: 06.05.2024
(51) Int. Cl.: F16C 11/04, G06F 1/16, H04M 1/02

(54) **HINGE MECHANISM AND FOLDABLE ELECTRONIC DEVICE**

(30) Priority: 23.11.2023 CN 202323191823 U
(71) Applicant: Huawei Technologies Co., Ltd., Shenzhen, Guangdong 518129 (CN)
(72) Inventor: LV, Ren, Shenzhen, Guangdong 518129 (CN); YU, Weidong, Shenzhen, Guangdong 518129 (CN); MAO, Weihua, Shenzhen, Guangdong 518129 (CN)
(74) Representative: Pfenning, Meinig & Partner mbB
(86) International application number: PCT/CN2024/091174
(87) International publication number: WO 2025/107520

(57) **Abstract**

This application relates to the field of foldable electronic device technologies, and provides a hinge mechanism and a foldable electronic device, to resolve a problem, in a related technology, that a hinge mechanism is prone to movement stuttering after the foldable electronic device falls. The hinge mechanism includes a base and swing arm assemblies connected to the base. The swing arm assembly includes a first swing arm, a second swing arm, a support plate, and a connection member. The connection member is slidably connected to the first swing arm. A sliding part and a first stop part are disposed on the second swing arm, the sliding part is located on a back side of the support plate, and the first stop part is disposed at an end part that is of the second swing arm and that is close to the base, and is configured to stop the support plate at a position of the first stop part. A first avoidance slot for avoiding the connection member is formed between the first stop part and the sliding part, a second stop part is further disposed at a position of the first avoidance slot, and the second stop part is configured to stop the support plate, to prevent the support plate from being inserted into the first avoidance slot. This application may be applied to an electronic device such as a mobile phone.

## Description

### TECHNICAL FIELD

This application relates to the field of foldable electronic device technologies, and in particular, to a hinge mechanism and a foldable electronic device.

### BACKGROUND

A foldable electronic device, for example, a foldable mobile phone or a foldable tablet computer, is increasingly favored by a large quantity of users for its large display area in an unfolded state and small volume in a folded state. The foldable electronic device is inevitably prone to fall during use. How to ensure that the foldable electronic device works normally after falling has become one of important topics in the industry.

A foldable electronic device in a related technology includes a display, two housings, and a hinge mechanism. The housings are configured to support the display; and the hinge mechanism is disposed at a joint of the two housings, and is separately connected to the two housings, so that the two housings can be switched between an unfolded state and a folded state. However, when the foldable electronic device in the related technology is in the folded state and falls, moving components of the hinge mechanism move relative to each other under inertia effect, causing misplacement between the moving components. As a result, the hinge mechanism is prone to movement stuttering, and the foldable electronic device cannot be normally unfolded.

### SUMMARY

Embodiments of this application provide a hinge mechanism and a foldable electronic device, to resolve a problem, in a related technology, that a hinge mechanism is prone to movement stuttering after a foldable electronic device falls.

To achieve the foregoing objectives, the following technical solutions are used in embodiments of this application.

According to a first aspect, an embodiment of this application provides a hinge mechanism, used in a foldable electronic device, and including a base and swing arm assemblies connected to the base, and the swing arm assemblies are capable of moving relative to the base between an unfolding position and a folding position. The swing arm assembly includes a first swing arm, a second swing arm, a support plate, and a connection member, where both the first swing arm and the second swing arm are capable of being rotatively connected to the base, the connection member is slidably connected to the first swing arm, a front face of the support plate is used for disposing a display of the foldable electronic device, a back face of the support plate is capable of being rotatively connected to the connection member, and the back face of the support plate is further slidably connected to the first swing arm. A sliding part and a first stop part are disposed on the second swing arm, the sliding part is located on a back side of the support plate, the connection member is capable of sliding relative to the sliding part along a direction of approaching and being away from the base, and the first stop part is disposed at an end part that is of the second swing arm and that is close to the base, and is configured to stop the support plate at a position of the first stop part. A first avoidance slot for avoiding the connection member is formed between the first stop part and the sliding part, a second stop part is further disposed at a position of the first avoidance slot, and the second stop part is configured to stop the support plate, to prevent the support plate from being inserted into the first avoidance slot.

According to the hinge mechanism in this embodiment of this application, the second stop part is disposed at the position of the first avoidance slot. In this way, when the swing arm assembly is at the folding position and the foldable electronic device falls, the second stop part may press against the support plate to stop the support plate, so as to prevent the support plate from being inserted into the first avoidance slot. This avoids movement stuttering caused by insertion of the support plate into the first avoidance slot, so that the swing arm assembly of the hinge mechanism can be normally unfolded, to ensure that the foldable electronic device can be normally unfolded. In addition, the first stop part and the second stop part stop the support plate, to prevent the support plate from being too close to the base. This prevents the support plate from over-extrusion of space of a bending area in which a display is accommodated, to ensure that the bending area of the display is not damaged due to over-extrusion.

In some embodiments, both the first stop part and the sliding part protrude from a first side face of the second swing arm, the second stop part is disposed between the first avoidance slot and the first side face, and the first stop part, the second stop part, and the sliding part enclose the first avoidance slot. A flange is disposed at an edge of one side that is of the support plate and that is close to the base, the flange is configured to press against the first stop part, and a distance L1 from an end part that is of the flange and that is close to the first side face to the first side face is less than a distance L2 between the first avoidance slot and the first side face. Such disposing increases strength of the first stop part, and reduces a risk that the first stop part is collided and broken by the support plate when the foldable electronic device falls.

In some embodiments, one side that is of the first stop part and that is close to the support plate is provided with a first stop face, one side that is of the second stop part and that is close to the support plate is provided with a second stop face, and the second stop face is flush with the first stop face. Such disposing can prevent the second stop face from protruding from the first stop face to form a boss structure. In this way, when the foldable electronic device falls, the flange can be prevented from colliding with an edge angle of the boss structure to cause damage to the flange.

In some embodiments, the second stop part is further provided with a bottom face disposed back to the second stop face, and the bottom face is flush with one end that is of the sliding part and that is close to the base. Such disposing can implement better support in the first stop part by the second stop part, and reduce a risk that the first stop part is collided and broken by the support plate.

In some embodiments, the second stop part is fastened to the first side face. Such disposing can implement better support in the first stop part by the second stop part, and further reduce a risk that the first stop part is collided and broken by the support plate.

In some embodiments, a chamfer is disposed at an edge of one end that is of the first avoidance slot and that is close to the first side face. Such disposing reduces a risk of sliding and stuttering of the connection member.

In some embodiments, along a length direction of the base, the first side faces are respectively located at edges of two opposite ends of the second swing arm, and the first stop part and the sliding part are disposed at each first side face. A plurality of flanges are disposed on the support plate, the plurality of flanges are arranged along the length direction of the base, and each flange is configured to press against a corresponding first stop part. Such disposing can prevent the second swing arm from being inclined.

In some embodiments, the first stop part, the second stop part, and the sliding part are of an integrated structure. Such disposing can reduce a quantity of components, and facilitate assembly of the second swing arm of the hinge mechanism.

In some embodiments, a first accommodating slot is disposed on the connection member, the second swing arm extends into the first accommodating slot, a first sliding slot is disposed at an edge of at least one side of the first accommodating slot, one end of the first sliding slot is close to the base, the other end is away from the base, and the sliding part and the first sliding slot are slidingly cooperated. Such disposing can enable sliding of the connection member relative to the second swing arm to be more stable.

In some embodiments, a second accommodating slot and a second sliding slot are disposed on the connection member, the second accommodating slot is provided for an end part that is of the first swing arm and that is away from the base to extend into, the second sliding slot is located at an edge of at least one side of the second accommodating slot, the second sliding slot is provided with a first end disposed close to the support plate and a second end disposed away from the support plate, a distance from the first end to a rotation center of the first swing arm is greater than a distance from the second end to the rotation center of the first swing arm. A sliding protrusion part is disposed on the end part that is of the first swing arm and that is away from the base, and the sliding protrusion part and the second sliding slot are slidingly cooperated, so that the connection member is slidably connected to the first swing arm. Such disposing reduces space occupied by the first swing arm outside the connection member, and can adjust distances between end parts of the two housings and the base, so that the hinge mechanism is well adapted to changes in a length of a first area and a length of a second area of the display when the display is folded and unfolded.

In some embodiments, a first arc-shaped plate is disposed on the back face of the support plate, a first arc-shaped slot is disposed on the connection member, along the length direction of the base, the first arc-shaped plate is located at an end part of the support plate, and the first arc-shaped plate and the first arc-shaped slot are slidingly cooperated, so that the back face of the support plate is capable of being rotatively connected to the connection member. Such disposing can prevent the first arc-shaped plate from occupying disposing space of the first swing arm and the second swing arm.

In some embodiments, a sliding slot member is disposed on the back face of the support plate, a third sliding slot is disposed on the sliding slot member, the third sliding slot is inclined relative to a thickness direction of the support plate, the third sliding slot is provided with a first slot end disposed close to the base and a second slot end disposed away from the base, and a distance from the first slot end to the support plate is greater than a distance from the second slot end to the support plate. A sliding accessory is disposed on the first swing arm, and the sliding accessory and the third sliding slot are slidingly cooperated, so that the back face of the support plate is slidably connected to the first swing arm. Such disposing can reduce space occupied by the third sliding slot on the first swing arm, so that the first swing arm and the support plate are more compact.

In some embodiments, a second avoidance slot is disposed on the first swing arm, the second avoidance slot penetrates the first swing arm, the sliding slot member penetrates the second avoidance slot, the sliding accessory is a shaft, and two ends of the sliding accessory are respectively connected to slot walls on two opposite sides of the second avoidance slot. Such disposing can reduce space occupied by the sliding slot member outside the first swing arm, and prevent the sliding accessory from occupying space outside the second avoidance slot.

In some embodiments, a second arc-shaped plate is disposed on the first swing arm, a second arc-shaped slot is disposed on the base, the base includes a base body and a fastening member detachably connected to the base body, and the second arc-shaped slot is formed between the base body and the fastening member, the second arc-shaped plate and the second arc-shaped slot are slidingly cooperated, so that the first swing arm is capable of being rotatively connected to the base. Such disposing facilitates maintenance and replacement of the first swing arm.

In some embodiments, two opposite sides of the base are respectively connected to the swing arm assemblies, and the second swing arms of the swing arm assemblies are in transmission connection via an even number of gears, so that the swing arm assemblies connected to the two opposite sides of the base move synchronously between the folding position and the unfolding position. Such disposing can enable the swing arm assemblies to move synchronously relative to the base.

According to a second aspect, an embodiment of this application provides a foldable electronic device, including a display, at least two housings, and the hinge mechanism in the first aspect, where the housings are configured to bear the display, the hinge mechanism is located at a joint of two adjacent housings, and a pair of swing arm assemblies of the hinge mechanism are connected to the corresponding housings respectively.

Beneficial effect of the electronic device in this embodiment of this application is the same as those of the hinge mechanism in the first aspect. Details are not described herein again.

### BRIEF DESCRIPTION OF DRAWINGS

FIG. 1 is a diagram of a structure obtained after a swing arm assembly on one side of a hinge mechanism is removed in a related technology;
FIG. 2 is an exploded view of the hinge mechanism shown in FIG. 1;
FIG. 3 is a diagram of a structure of a second swing arm of the hinge mechanism in FIG. 1;
FIG. 4 is an A-A sectional view obtained after a base is removed from the hinge mechanism in FIG. 1;
FIG. 5 is a diagram of a structure of a foldable electronic device (a mobile phone) in an unfolded state according to some embodiments of this application;
FIG. 6 is a diagram of a structure of the foldable electronic device in FIG. 5 in a folded state;
FIG. 7 is an exploded view of the foldable electronic device in FIG. 6;
FIG. 8 is a B-B sectional view of FIG. 6 (in the figure, a support plate on one side of the hinge mechanism is removed);
FIG. 9 is a diagram of a structure of a hinge mechanism according to some embodiments of this application;
FIG. 10 is a local view obtained after a swing arm assembly on one side of the hinge mechanism in FIG. 9 is removed;
FIG. 11 is an exploded view of the hinge mechanism in FIG. 10 at one angle of view;
FIG. 12 is an exploded view of the hinge mechanism in FIG. 10 at another angle of view;
FIG. 13 is a diagram of a structure of a connection member of the hinge mechanism shown in FIG. 10;
FIG. 14 is a diagram of a structure of a second swing arm of the hinge mechanism shown in FIG. 10;
FIG. 15 is a C-C sectional view of the hinge mechanism shown in FIG. 10;
FIG. 16 is a partial enlarged view of the hinge mechanism shown in FIG. 10;
FIG. 17 is a partial enlarged diagram of FIG. 16 at D;
FIG. 18 is a diagram of a structure of the second swing arm in FIG. 14 at another angle of view;
FIG. 19 is a diagram 1 of a position relationship between a first stop part, a second stop part, and a sliding part according to some other embodiments of this application;
FIG. 20 is a diagram 2 of a position relationship between a first stop part, a second stop part, and a sliding part according to some other embodiments of this application;
FIG. 21 is a D-D sectional view of the hinge mechanism shown in FIG. 10;
FIG. 22 is an E-E sectional view of the hinge mechanism 100 shown in FIG. 10;
FIG. 23 is an F-F sectional view of the hinge mechanism shown in FIG. 10; and
FIG. 24 is a sectional view of the hinge mechanism shown in FIG. 9.

### DESCRIPTION OF EMBODIMENTS

Technical solutions in some embodiments of this application are clearly and completely described below with reference to accompanying drawings.

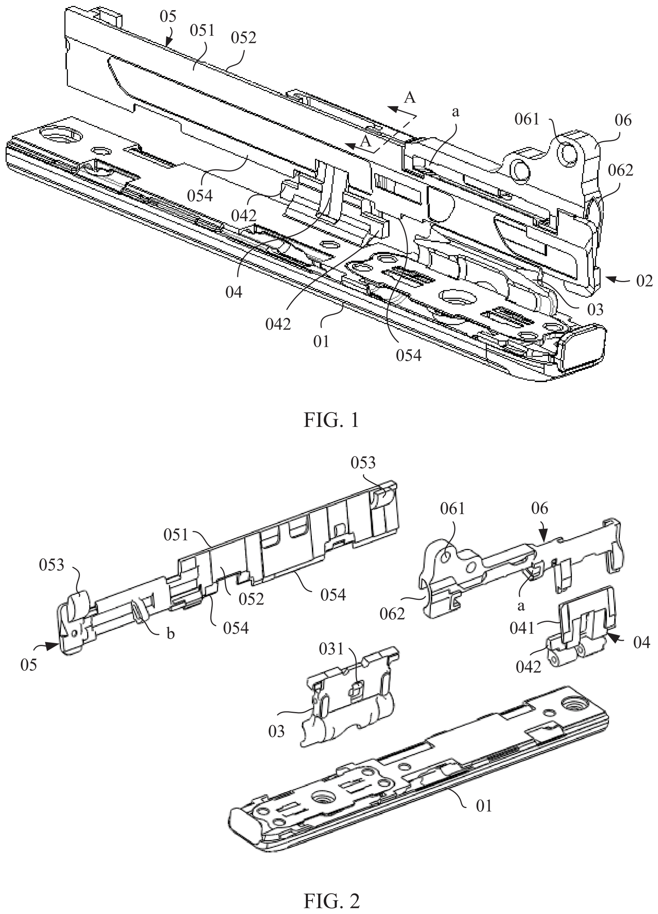

As shown in FIG. 1 and FIG. 2, FIG. 1 is a diagram of a structure obtained after a swing arm assembly 02 on one side of a hinge mechanism is removed in a related technology, and FIG.

2 is an exploded view of the hinge mechanism shown in FIG. 1. The hinge mechanism is used in a foldable electronic device. The hinge mechanism includes a base 01 and swing arm assemblies 02 (only a swing arm assembly 02 on one side is shown in the figure) connected to the base 01, and the swing arm assemblies 02 are capable of moving relative to the base 01 between an unfolding position and a folding position (as shown in FIG. 1).

The swing arm assembly 02 includes a first swing arm 03, a second swing arm 04, a support plate 05 (also referred to as a door plate), and a connection member 06. Both the first swing arm 03 and the second swing arm 04 are capable of being rotatively connected to the base 01. The connection member 06 is configured to be connected to a housing of the foldable electronic device. For example, the connection member 06 is provided with a connection hole 061, a fastener (for example, a screw) is penetrated in the connection hole 061, and the fastener is screwed to the housing. The connection member 06 is slidably connected to the first swing arm 03. For example, an end part of the first swing arm 03 and a sliding slot a on the connection member 06 are slidingly cooperated.

A front face 051 of the support plate 05 is used for disposing a display of the foldable electronic device, and a back face 052 of the support plate 05 is capable of being rotatively connected to the connection member 06. For example, an arc-shaped plate 053 on the back face 052 of the support plate 05 and an arc-shaped slot 062 on the connection member 06 are slidingly cooperated, to implement a rotative connection between the support plate 05 and the connection member 06. In addition, the back face 052 of the support plate 05 is further slidably connected to the first swing arm 03. For example, a sliding slot b disposed on the back face 052 of the support plate 05 and a sliding axis 031 disposed on the first swing arm 03 are slidingly cooperated, to implement a sliding connection between the support plate 05 and the first swing arm 03.

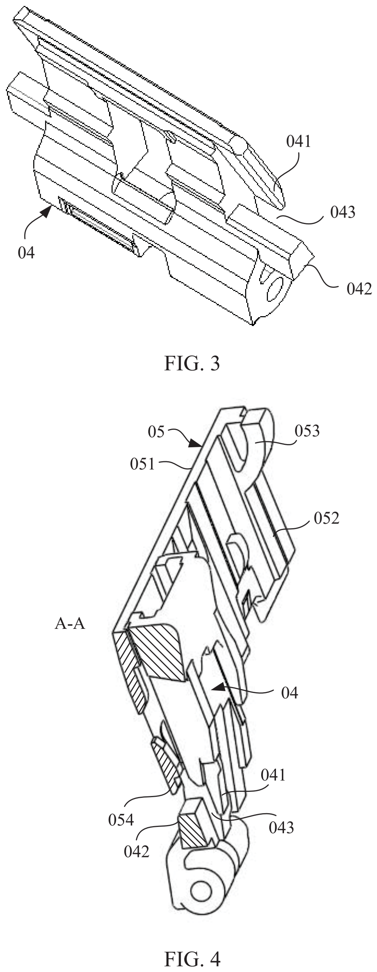

As shown in FIG. 1, FIG. 3, and FIG. 4, FIG. 3 is a diagram of a structure of the second swing arm 04 of the hinge mechanism in FIG. 1, and FIG. 4 is an A-A sectional view obtained after the base 01 is removed from the hinge mechanism in FIG. 1. A sliding part 041 and a first stop part 042 are disposed on the second swing arm 04. The sliding part 041 is located on a back side of the support plate 05. The connection member 06 is capable of sliding relative to the sliding part 041 along a direction of approaching and being away from the base 01. The first stop part 042 is located at an end part that is of the second swing arm 04 and that is close to the base 01, and is configured to stop the support plate 05 at a position of the first stop part 042, to limit a distance between the support plate 05 and the base 01. An avoidance slot 043 for avoiding the connection member 06 is formed between the first stop part 042 and the sliding part 041.

As shown in FIG. 1 and FIG. 4, when the swing arm assembly 02 is at the folding position, because there is a cooperating gap between the support plate 05 and the connection member 06 and there is a cooperating gap between the support plate 05 and the first swing arm 03, and there is also a cooperating gap between the first swing arm 03 and the base 01, when the foldable electronic device falls, under inertia effect, the flange 054 of the support plate 05 moves towards a direction (that is, a downward direction in FIG. 4) close to the base 01. After colliding with the first stop part 042, the support plate 05 is easily inserted into the avoidance slot 043. As a result, the support plate 05 is prone to movement stuttering, and the foldable electronic device cannot be normally unfolded.

Therefore, this embodiment of this application provides a hinge mechanism and a foldable electronic device. A second stop part is disposed in an avoidance slot of a second swing arm, to prevent a support plate from being inserted into the avoidance slot. In this way, when the foldable electronic device falls, a problem that the support plate of the hinge mechanism is prone to movement stuttering can be resolved, to ensure that the foldable electronic device can be normally unfolded.

The foldable electronic device in this embodiment of this application may be an electronic device, for example, a mobile phone, a tablet computer, a notebook computer, or a wearable device. The following uses a mobile phone as an example to describe a specific structure of the hinge mechanism in the foldable electronic device. For another foldable electronic device, specifically, refer to the hinge mechanism in the mobile phone embodiment. Details are not described herein again.

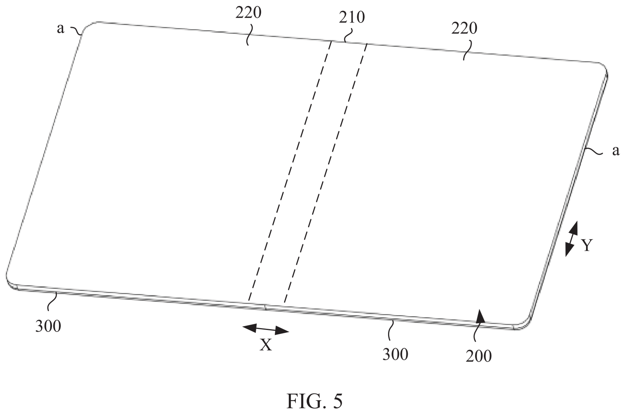

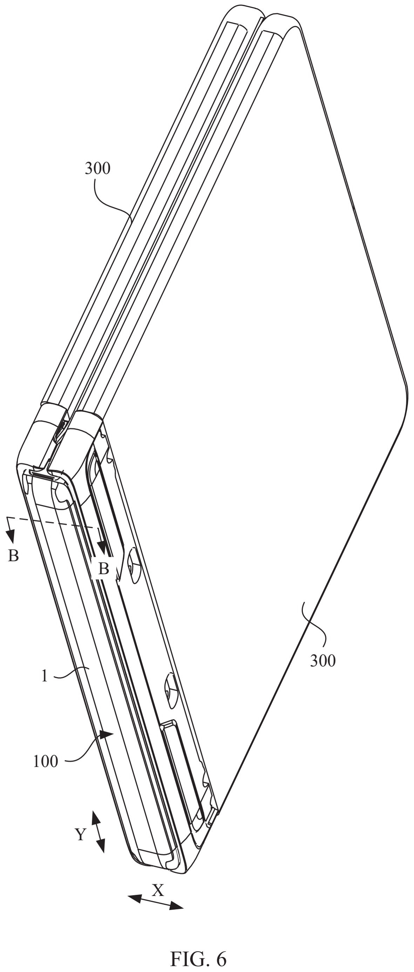

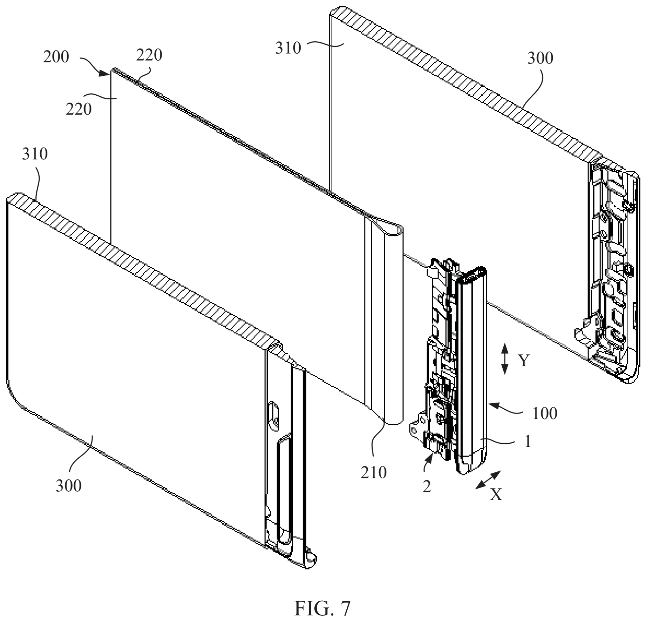

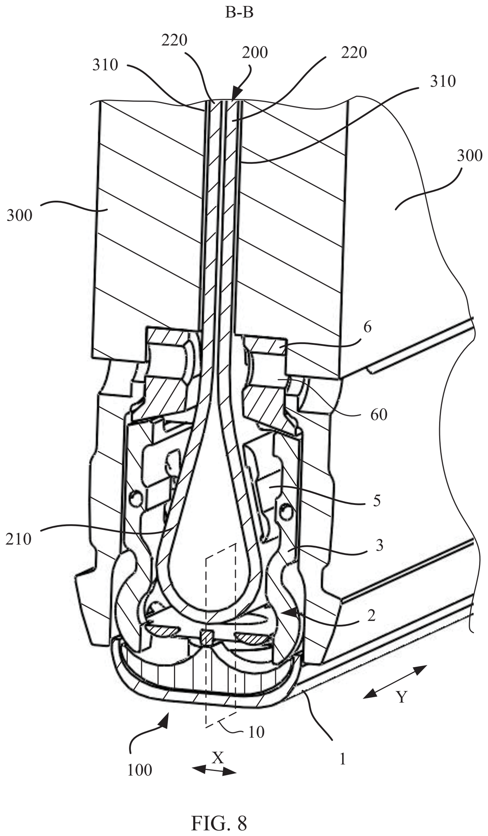

FIG. 5 is a diagram of a structure of a foldable electronic device (a mobile phone) in an unfolded state according to some embodiments of this application. FIG. 6 is a diagram of a structure of the foldable electronic device in FIG. 5 in a folded state. FIG. 7 is an exploded view of the foldable electronic device in FIG. 6. FIG. 8 is a B-B sectional view of FIG. 6 (in the figure, a support plate on one side of a hinge mechanism 100 is removed).

As shown in FIG. 5, FIG. 6, and FIG. 7, the foldable electronic device in this embodiment of this application includes a display 200, two housings 300, and a hinge mechanism 100. The housings 300 are configured to bear the display 200. The hinge mechanism 100 is disposed at a joint of the two housings 300, so that the two housings 300 can be switched between the unfolded state (as shown in FIG. 5) and the folded state (as shown in FIG. 6).

The display 200 is bendable, and may be bent and deformed after being applied with an external force. As shown in FIG. 5, when the two housings 300 are in the unfolded state, the display 200 is unfolded, and a display area of the display 200 is exposed to display image information to a user. The display 200 includes a first area 210 and two second areas 220 that are respectively located on two opposite sides of the first area 210. The first area 210 covers the hinge mechanism 100, and the second area 220 covers a display support face 310 of the housing 300.

The display 200 may be entirely of a flexible screen structure. For example, both the first area 210 and the second areas 220 of the display 200 are of flexible screen structures. Certainly, the display 200 may be of a flexible screen structure on a middle folded part, and of a hard screen structure on two sides. For example, the first area 210 of the display 200 is of a flexible screen structure, and the second areas 220 are of a hard screen structure.

As shown in FIG. 6 and FIG. 8, when the two housings 300 are in the folded state, the display 200 is folded between the two housings 300 in this case, the two second areas 220 of the display 200 are stacked, and the first area 210 is folded into a water drop form. The "stacked" means that the two second areas 220 are superposed in a thickness direction, and the thickness directions of the two second areas 220 are parallel or roughly parallel (for example, a deviation is within 10°). The two stacked second areas 220 may be attached together, or there may be a gap between the first area 210 and the second area 220. This is not specifically limited herein. The first area 210 is not limited to being folded into the water droplet form, and may be alternatively folded into another form.

The foldable electronic device in this embodiment of this application is not limited to being disposed with two housings 300, or may be disposed with more than two housings 300, for example, three housings 300. Two adjacent housings 300 may be switched between an unfolded state and a folded state. The hinge mechanism 100 is disposed at a joint of the two adjacent housings 300.

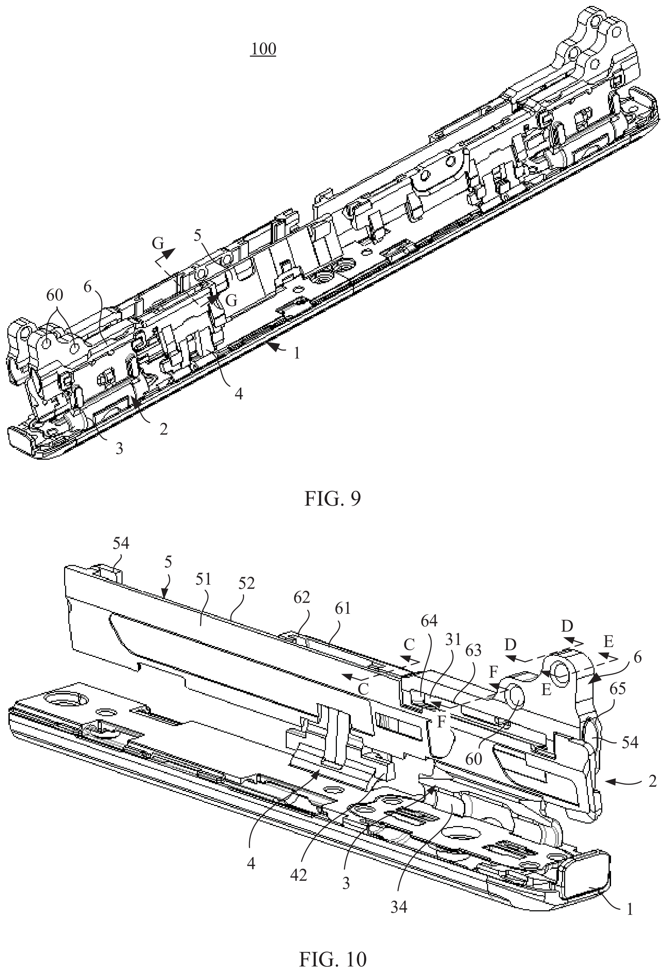

As shown in FIG. 8 and FIG. 9, FIG. 9 is a diagram of a structure of a hinge mechanism 100 according to some embodiments of this application. The hinge mechanism 100 includes a base 1 and swing arm assemblies 2 connected to the base 1, and the swing arm assemblies 2 are capable of moving relative to the base 1 between an unfolding position and a folding position (as shown in FIG. 8 and FIG. 9).

Specifically, the swing arm assemblies 2 are respectively connected to two opposite sides of the base 1, and each swing arm assembly 2 is connected to a corresponding housing 300. For example, as shown in FIG. 8, a swing arm assembly 2 connected to the left side of the base 1 is connected to a housing 300 on the left side, and a swing arm assembly 2 connected to the right side of the base 1 is connected to a housing 300 on the right side.

That the swing arm assemblies 2 are respectively connected to the two opposite sides of the base 1 specifically means that the swing arm assemblies 2 are respectively connected to parts on the two opposite sides of the base 1. For example, as shown in FIG. 8, one swing arm assembly 2 is connected to a part on the left side of the base 1, and the other swing arm assembly 2 is connected to a part on the right side of the base 1. In some embodiments, as shown in FIG. 8, the swing arm assemblies 2 are symmetrically distributed on two sides of a median face 10 of the base 1 along a width direction X of the base 1.

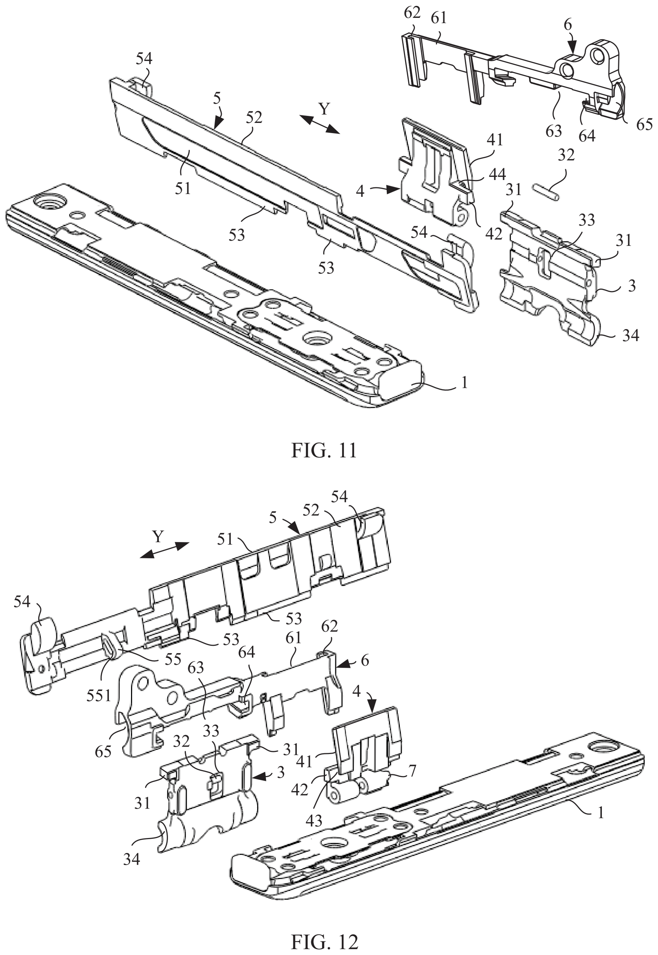

As shown in FIG. 9 to FIG. 12, FIG. 10 is a local view obtained after a swing arm assembly 2 on one side of the hinge mechanism 100 in FIG. 9 is removed, FIG. 11 is an exploded view of the hinge mechanism 100 in FIG. 10 at one angle of view, and FIG. 12 is an exploded view of the hinge mechanism 100 in FIG. 10 at another angle of view. The swing arm assembly 2 includes a first swing arm 3, a second swing arm 4, a support plate 5, and a connection member 6. Both the first swing arm 3 and the second swing arm 4 are capable of being rotatively connected to the base 1. The connection member 6 is connected to a housing 300 of a foldable electronic device. For example, the connection member 6 may be screwed to the housing 300 via a fastener (for example, a screw). The connection member 6 is provided with a connection hole 60 for the fastener to penetrate. In addition, the connection member 6 is slidably connected to the first swing arm 3.

A front face 51 of the support plate 5 is used for disposing a display 200 of the foldable electronic device, a back face 52 of the support plate 5 is capable of being rotatively connected to the connection member 6, and the back face 52 of the support plate 5 is further slidably connected to the first swing arm 3.

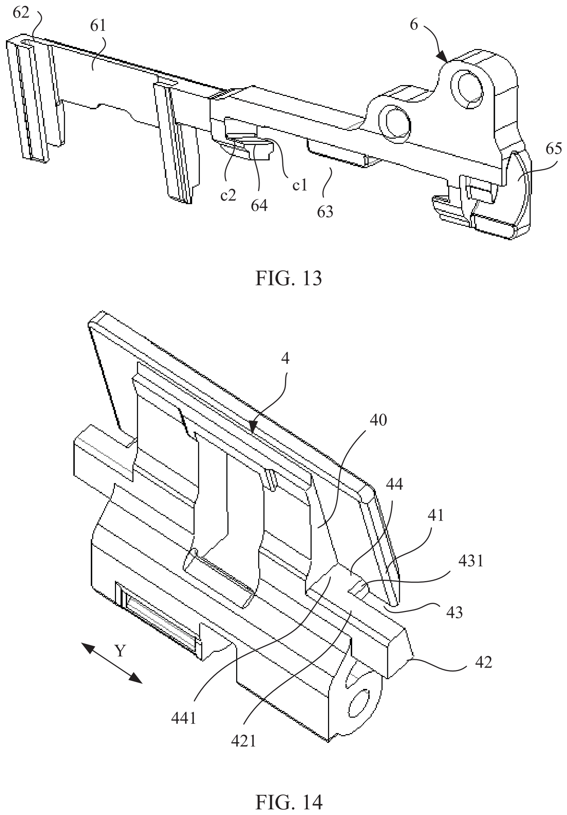

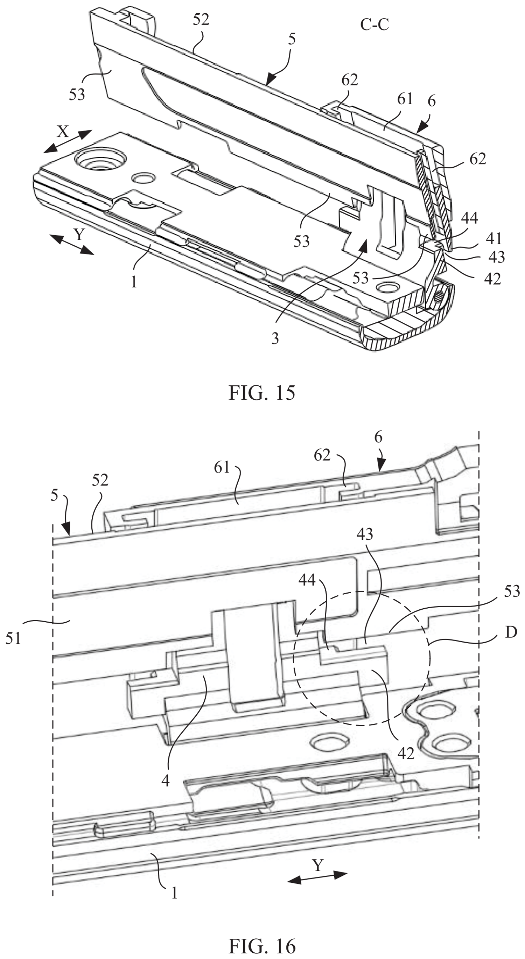

As shown in FIG. 13, FIG. 14, and FIG. 15, FIG. 13 is a diagram of a structure of the connection member 6 of the hinge mechanism 100 shown in FIG. 10, FIG. 14 is a diagram of a structure of the second swing arm 4 of the hinge mechanism 100 shown in FIG. 10, and FIG. 15 is a C-C sectional view of the hinge mechanism 100 shown in FIG. 10. A sliding part 41 is disposed on the second swing arm 4, the sliding part 41 is located on a back side of the support plate 5 (that is, one side that is of the support plate 5 and that is away from the display 200), and the connection member 6 is capable of sliding relative to the sliding part 41 along a direction of approaching and being away from the base 1.

In some embodiments, as shown in FIG. 13, FIG. 14, and FIG. 15, a first accommodating slot 61 is disposed on the connection member 6, the second swing arm 4 extends into the first accommodating slot 61, first sliding slots 62 are disposed at edges of two sides (or an edge of one side) of the first accommodating slot 61, one end of the first sliding slot 62 is close to the base 1, and the other end is away from the base 1, and the sliding part 41 and the first sliding slot 62 are slidingly cooperated.

The second swing arm 4 extends into the first accommodating slot 61, so that a structure between the second swing arm 4 and the connection member 6 is more compact, and space occupied by the second swing arm 4 outside the connection member 6 is reduced.

The sliding part 41 and the first sliding slot 62 are slidingly cooperated. In this way, the first sliding slot 62 and the sliding part 41 have a function of limiting each other, thereby reducing shaking of the connection member 6 in a sliding process relative to the second swing arm 4, and enabling the connection member 6 to slide more smoothly relative to the second swing arm 4.

As shown in FIG. 14, the sliding part 41 and the second swing arm 4 are of an integrated structure, but is not limited thereto. The sliding part 41 and the second swing arm 4 may be alternatively designed separately.

In some embodiments, as shown in FIG. 14, the sliding part 41 is a convex rib. However, this is not limited thereto. The sliding part 41 may be alternatively disposed in another structure.

As shown in FIG. 14, FIG. 15, and FIG. 16, FIG. 16 is a partial enlarged view of the hinge mechanism 100 shown in FIG. 10. A first stop part 42 is disposed on the second swing arm 4, and the first stop part 42 is located at an end part that is of the second swing arm 4 and that is close to the base 1, and is configured to stop the support plate 5 at a position of the first stop part 42, to limit a distance between the support plate 5 and the base 1.

A first avoidance slot 43 for avoiding the connection member 6 is formed between the first stop part 42 and the sliding part 41. A second stop part 44 is further disposed at a position of the first avoidance slot 43. The second stop part 44 is configured to stop the support plate 5, to prevent the support plate 5 from being inserted into the first avoidance slot 43.

According to the hinge mechanism 100 in this embodiment of this application, the second stop part 44 is disposed at the position of the first avoidance slot 43. In this way, when the swing arm assembly 2 is at the folding position and the foldable electronic device falls, the second stop part 44 may press against the support plate 5 to stop the support plate 5, so as to prevent the support plate 5 from being inserted into the first avoidance slot 43. This avoids movement stuttering caused by insertion of the support plate 5 into the first avoidance slot 43, so that the swing arm assembly 2 of the hinge mechanism 100 can be normally unfolded, to ensure that the foldable electronic device can be normally unfolded. In addition, the first stop part 42 and the second stop part 44 stop the support plate 5, to prevent the support plate 5 from being too close to the base 1, as shown in FIG. 8. This prevents the support plate 5 from over-extrusion of space of a bending area (that is, the first area 210) in which a display is accommodated, to ensure that the bending area of the display is not damaged due to over-extrusion.

It should be noted that when the swing arm assembly 2 moves normally between the folding position and the unfolding position, the support plate 5 presses against the first stop part 42, and does not press against the second stop part 44. When the swing arm assembly 2 is at the folding position and the foldable electronic device falls, due to impact of inertia force, the support plate 5 moves to a position of the second stop part 44 to press against the second stop part 44, and the second stop part 44 prevents the support plate 5 from being inserted into the first avoidance slot 43.

In some embodiments, as shown in FIG. 14, both the first stop part 42 and the sliding part 41 protrude from a first side face 40 of the second swing arm 4, the second stop part 44 is disposed between the first avoidance slot 43 and the first side face 40, and the first stop part 42, the second stop part 44, and the sliding part 41 enclose the first avoidance slot 43.

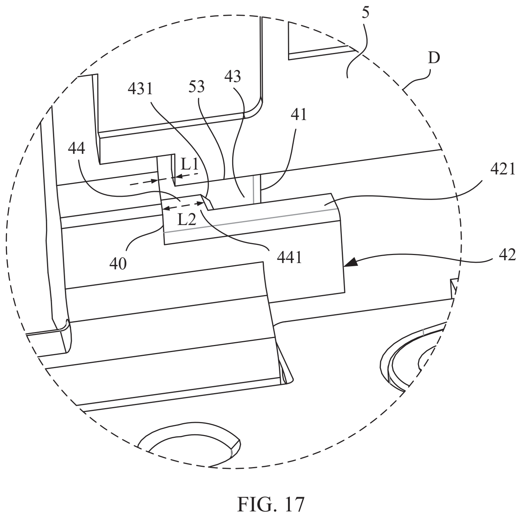

As shown in FIG. 16 and FIG. 17, FIG. 17 is a partial enlarged diagram of FIG. 16 at D. A flange 53 is disposed at an edge of one side that is of the support plate 5 and that is close to the base 1, the flange 53 is configured to press against the first stop part 42, and a distance L1 from an end part that is of the flange 53 and that is close to the first side face 40 to the first side face 40 is less than a distance L2 between the first avoidance slot 43 and the first side face 40. As shown in FIG. 17, the distance L1 between the first avoidance slot 43 and the first side face 40 is a distance from a slot wall of one side that is of the first avoidance slot 43 and that is close to the first side face 40 to the first side face 40.

The distance L1 from the flange 53 to the first side face 40 is set to be less than the distance L2 between the first avoidance slot 43 and the first side face 40. In this way, when the foldable electronic device falls, the second stop part 44 may be located on a motion track of the flange 53, so that the second stop part 44 can stop the flange 53, to prevent the support plate 5 from being inserted into the first avoidance slot 43.

The second stop part 44 is disposed between the first avoidance slot 43 and the first side face 40, and the first stop part 42, the second stop part 44, and the sliding part 41 enclose the first avoidance slot 43. In this way, the second stop part 44 supports and strengthens the first stop part 42, to increase strength of the first stop part 42, and reduce a risk that the first stop part 42 is collided and broken by the support plate 5 when the foldable electronic device falls.

In some embodiments, as shown in FIG. 16 and FIG. 17, one side that is of the first stop part 42 and that is close to the support plate 5 is provided with a first stop face 421, one side that is of the second stop part 44 and that is close to the support plate 5 is provided with a second stop face 441, and the second stop face 441 is flush with the first stop face 421. Such disposing can prevent the second stop face 441 from protruding from the first stop face 421 to form a boss structure. In this way, when the foldable electronic device falls, the flange 53 can be prevented from colliding with an edge angle of the boss structure to cause damage to the flange 53.

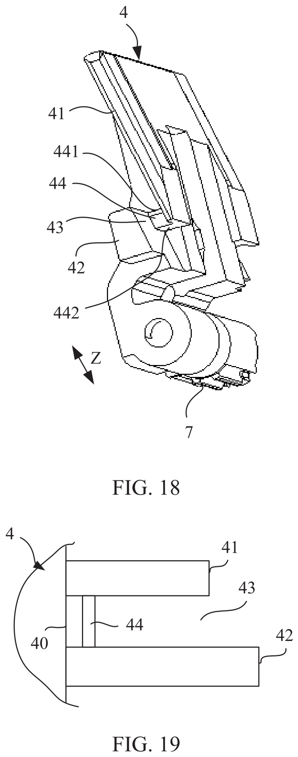

In some embodiments, as shown in FIG. 16 and FIG. 18, FIG. 18 a diagram of a structure of the second swing arm 4 in FIG. 14 at another angle of view. The second stop part 44 is further provided with a bottom face 442 disposed back to the second stop face 441, and the bottom face 442 is flush with one end (that is, a bottom end of the sliding part 41 shown in FIG. 18) that is of the sliding part 41 and that is close to the base 1. Such disposing can increase a size of the second stop part 44 along a slot depth Z direction of the first avoidance slot 43, so that the second stop part 44 can better support the first stop part 42, to increase strength of the first stop part 42. Therefore, when the foldable electronic device falls, a risk that the first stop part 42 is collided and broken by the support plate 5 can be reduced.

In some embodiments, as shown in FIG. 16 and FIG. 17, the second stop part 44 is fastened to the first side face 40. Such disposing can implement better support in the first stop part 42 by the second stop part 44, to increase strength of the first stop part 42. Therefore, when the foldable electronic device falls, a risk that the first stop part 42 is collided and broken by the support plate 5 can be further reduced.

Certainly, in addition to being fastened to the first side face 40, the second stop part 44 is in a position relationship shown in FIG. 19. FIG. 19 is a diagram 1 of a position relationship among the first stop part 42, the second stop part 44, and the sliding part 41 according to some other embodiments of this application. Alternatively, the second stop part 44 may be spaced from the first side face 40, the second stop part 44 is a stop wall, and the stop wall is disposed between the first stop part 42 and the sliding part 41.

In some embodiments, as shown in FIG. 16 and FIG. 17, the first stop part 42, the second stop part 44, and the sliding part 41 are of an integrated structure. Such disposing can reduce a quantity of components, and facilitate assembly of the second swing arm 4 of the hinge mechanism 100.

Certainly, the second stop part 44 may be alternatively designed separately with the first stop part 42 and the sliding part 41, and the second stop part 44 is assembled with the first stop part 42 and the sliding part 41.

In some embodiments, as shown in FIG. 17, a chamfer 431 is disposed at an edge of one end that is of the first avoidance slot 43 and that is close to the first side face 40. In such disposing, when the connection member 6 shakes and slight misplacement occurs between the connection member 6 and the first avoidance slot 43, the chamfer 431 at the edge of the first avoidance slot 43 may guide the connection member 6, and the connection member 6 may slide into the first avoidance slot 43 via the chamfer 431, thereby reducing a risk of sliding and stuttering of the connection member 6.

In some embodiments, as shown in FIG. 14, FIG. 15, and FIG. 16, along a length direction Y of the base 1, the first side faces 40 are respectively located at edges of two opposite ends of the second swing arm 4, and both the first stop part 42 and the sliding part 41 are disposed at each first side face 40. A plurality of flanges 53 are disposed on the support plate 5, the plurality of flanges 53 are arranged along the length direction Y of the base 1, and each flange 53 is configured to press against a corresponding first stop part 42. In such disposing, when the foldable electronic device falls, first stop parts 42 at two ends of the second swing arm 4 collide with flanges 53 of the support plate 5, so that the second swing arm 4 can maintain force balance, to avoid inclining of the second swing arm 4.

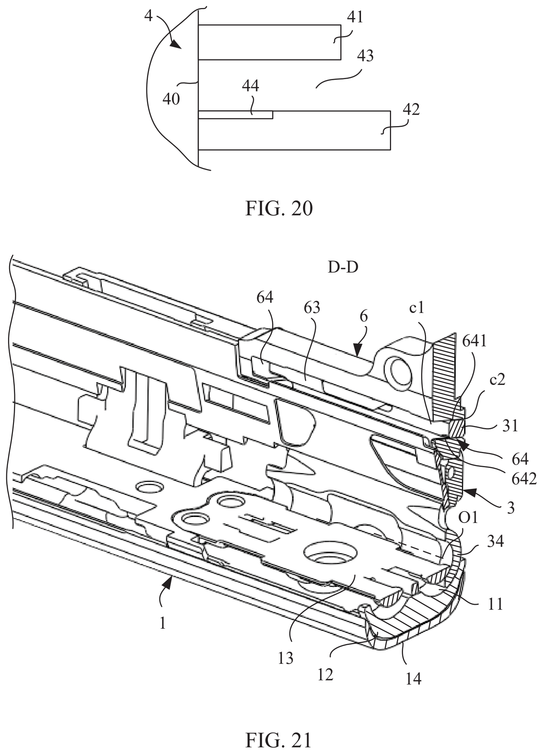

According to the hinge mechanism 100 in this embodiment of this application, the second stop part 44 may be disposed at another position in addition to the foregoing disposition. Specifically, as shown in FIG. 20, FIG. 20 is a diagram 2 of a position relationship among the first stop part 42, the second stop part 44, and the sliding part 41 according to some other embodiments of this application. The second stop part 44 is disposed on the first stop part 42 and protrudes from a surface of the first stop part 42, and the second stop part 44 is located at an edge of the first avoidance slot 43. As shown in FIG. 20, the second stop part 44 is a convex rib, but is not limited thereto. The second stop part 44 may be alternatively a stop column, a stop block, or the like. This is not specifically limited herein. There may be one or more second stop parts 44. This is not specifically limited herein.

In some embodiments, as shown in FIG. 10, FIG. 11, and FIG. 13, a second accommodating slot 63 is disposed on the connection member 6, the second accommodating slot 63 is provided for an end part that is of the first swing arm 3 and that is away from the base 1 to extend into, and the second sliding slots 64 are disposed at two edges (or one edge) of the second accommodating slot 63.

As shown in FIG. 12, FIG. 13, and FIG. 21, FIG. 21 is a D-D sectional view of the hinge mechanism 100 shown in FIG. 10. The second sliding slot 64 is provided with a first end c1 disposed close to the support plate 5 and a second end c2 disposed away from the support plate 5, a distance from the first end c1 to a rotation center O1 of the first swing arm 3 is greater than a distance from the second end c2 to the rotation center O1 of the first swing arm. A sliding protrusion part 31 is disposed on the end part that is of the first swing arm 3 and that is away from the base 1, and the sliding protrusion part 31 and the second sliding slot 64 are slidingly cooperated, so that the connection member and the first swing arm 3 are slidably connected.

As shown in FIG. 11 and FIG. 12, the sliding protrusion part 31 is a protrusion block disposed on the first swing arm 3, but is not limited thereto. The sliding protrusion part 31 may be alternatively disposed in another structure. As shown in FIG. 21, the distances from the first end c1 and the second end c2 to the rotation center O1 of the first swing arm 3 may be distances from a first end c1 and a second end c2 of a slot wall (for example, a slot wall 641 or a slot wall 642) on one side of the second sliding slot 64 to the rotation center O1 of the first swing arm 3.

The end part of the first swing arm 3 is extended into the second accommodating slot 63, so that a structure between the first swing arm 3 and the connection member 6 is more compact, and space occupied by the first swing arm 3 outside the connection member 6 is reduced. The distance from the first end c1 to the rotation center O1 of the first swing arm 3 is set to be greater than the distance from the second end c2 to the rotation center O1 of the first swing arm 3. In such disposing, when the swing arm assembly 2 moves between the unfolding position and the folding position, the connection member 6 may approach and be away from the base 1 under an action of the sliding protrusion part 31, so that distances between end parts (for example, end parts a shown in FIG. 5) of the two housings 300 and the base 1 can be adjusted. Therefore, the hinge mechanism 100 is well adapted to changes in a length of the first area 210 and a length of the second area 220 of the display 200 when the display 200 is folded and unfolded, to prevent the display 200 from being pulled by the housing 300 in a process of unfolding and folding.

In some embodiments, as shown in FIG. 11, FIG. 12, and FIG. 22, FIG. 22 is an E-E sectional view of the hinge mechanism 100 shown in FIG. 10. A first arc-shaped plate 54 is disposed on the back face 52 of the support plate 5, a first arc-shaped slot 65 is disposed on the connection member 6, along the length direction Y of the base 1, the first arc-shaped plate 54 is located at an end part of the support plate 5, and the first arc-shaped plate 54 and the first arc-shaped slot 65 are slidingly cooperated, so that the back face 52 of the support plate 5 is capable of being rotatively connected to the connection member 6. The first arc-shaped plate 54 is disposed at the end part of the support plate 5, so that the first arc-shaped plate 54 can be prevented from occupying disposing space of the first swing arm 3 and the second swing arm 4, thereby facilitating an optimized layout of positions of the first swing arm 3, the second swing arm 4, and the connection member 6.

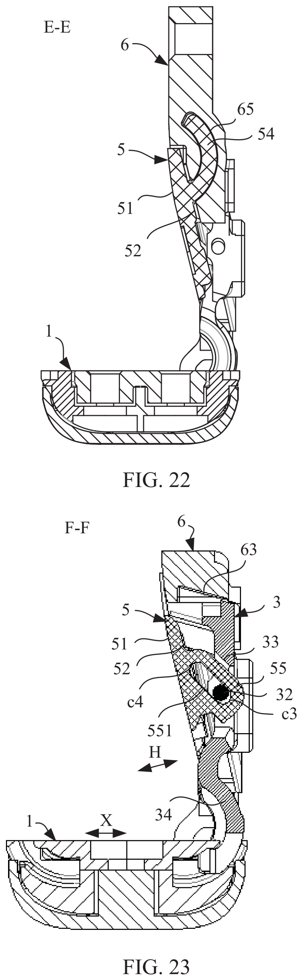

As shown in FIG. 22, the first arc-shaped plate 54 and the support plate 5 are of an integrated structure, but is not limited thereto. The first arc-shaped plate 54 and the support plate 5 may be alternatively disposed separately, and the first arc-shaped plate 54 and the support plate 5 are assembled together.

Certainly, according to an actual situation, the first arc-shaped plate 54 may be alternatively disposed at a middle position of the support plate 5 along the length direction Y of the base 1.

In some embodiments, as shown in FIG. 10, FIG. 12, and FIG. 23, FIG. 23 is an F-F sectional view of the hinge mechanism 100 shown in FIG. 10. A sliding slot member 55 is disposed on the back face 52 of the support plate 5, a third sliding slot 551 is inclined relative to a thickness direction H of the support plate 5, the third sliding slot 551 is provided with a first slot end c3 disposed close to the base 1 and a second slot end c4 disposed away from the base 1, and a distance from the first slot end c3 to the support plate 5 is greater than a distance from the second slot end c4 to the support plate 5. A sliding accessory 32 is disposed on the first swing arm 3, and the sliding accessory 32 and the third sliding slot 551 are slidingly cooperated, so that the back face 52 of the support plate 5 and the first swing arm 3 are slidably connected.

The third sliding slot 551 is inclined relative to the thickness direction H of the support plate 5, and the distance from the first slot end c3 to the support plate 5 is greater than the distance from the second slot end c4 to the support plate 5. In such disposing, when the swing arm assembly 2 moves between the unfolding position and the folding position, the sliding accessory 32 may slide along the inclined third sliding slot 551, so that the support plate 5 may swing along with the first swing arm 3, to support the first area 210 of the display 200.

In addition, compared with that the third sliding slot 551 is disposed on the first swing arm 3, the sliding slot member 55 is disposed on the back side of the support plate 5, so that space occupied by the third sliding slot 551 on the first swing arm 3 can be reduced, and a size of the first swing arm 3 can be reduced in the width direction X of the base 1, and the first swing arm 3 and the support plate 5 are more compact.

In some embodiments, as shown in FIG. 12 and FIG. 23, a second avoidance slot 33 is disposed on the first swing arm 3, the second avoidance slot 33 penetrates the first swing arm 3, the sliding slot member 55 penetrates the second avoidance slot 33, the sliding accessory 32 is a shaft, and two ends of the sliding accessory 32 are respectively connected to slot walls on two opposite sides of the second avoidance slot 33.

The sliding slot member 55 penetrates the second avoidance slot 33, so that space occupied by the sliding slot member 55 outside the first swing arm 3 can be reduced, and the first swing arm 3 and the support plate 5 are more compact. The sliding accessory 32 is set as the shaft, and the two ends of the sliding accessory 32 are respectively connected to the slot walls on the two opposite sides of the second avoidance slot 33, so that the sliding accessory 32 may be prevented from occupying space outside the second avoidance slot 33, and the sliding accessory 32 and the first swing arm 3 are more compact, thereby helping reduce space occupied by the hinge mechanism 100 on the foldable electronic device.

As shown in FIG. 23, the sliding slot member 55 and the support plate 5 are of an integrated structure, but is not limited thereto. The sliding slot member 55 and the support plate 5 may be alternatively disposed separately, and the sliding slot member 55 and the support plate 5 are assembled together.

In some embodiments, as shown in FIG. 10 and FIG. 21, a second arc-shaped plate 34 is disposed on the first swing arm 3, and a second arc-shaped slot 11 is disposed on the base 1. The base 1 includes a base body 12 and a fastening member 13 detachably connected to the base body 12, and the second arc-shaped slot 11 is formed between the base body 12 and the fastening member 13, the second arc-shaped plate 34 and the second arc-shaped slot 11 are slidingly cooperated, so that the first swing arm 3 is capable of being rotatively connected to the base 1.

The fastening member 13 is detachably connected to the base body 12, so that when the second arc-shaped plate 34 of the first swing arm 3 is damaged, the fastening member 13 may be detached from the base body 12, thereby facilitating maintenance and replacement of the first swing arm 3.

As shown in FIG. 21, the second arc-shaped plate 34 and the first swing arm 3 are of an integrated structure, but is not limited thereto. The second arc-shaped plate 34 and the first swing arm 3 may be alternatively disposed separately, and the second arc-shaped plate 34 and the first swing arm 3 are assembled together. As shown in FIG. 21, the fastening member 13 may be detachably connected to the base body 12 via a fastener (for example, a screw), but is not limited thereto. The fastening member 13 may be alternatively detachably connected to the base body 12 through clamping, bonding, or the like.

In some embodiments, as shown in FIG. 21, the base 1 further includes a shaft cover 14, and the shaft cover 14 is located on a back side (that is, one side away from the display 200) of the base body 12. The shaft cover 14 is an appearance part of the foldable electronic device, and may cover components such as the base body 12, to ensure an appearance at a position of the hinge mechanism 100 when the foldable electronic device is folded.

The shaft cover 14 may be detachably connected to the base body 12 via the fastener (for example, the screw), but is not limited thereto. The shaft cover 14 may be alternatively detachably connected to the base body 12 through clamping, bonding, or the like.

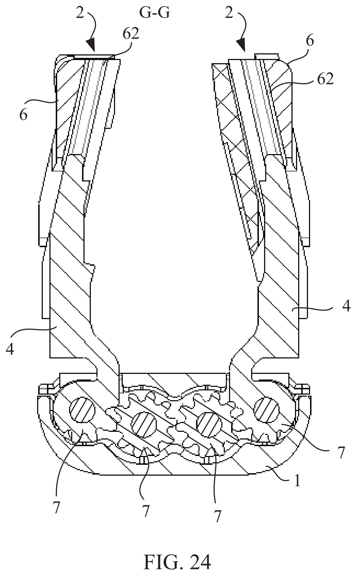

In some embodiments, as shown in FIG. 24, FIG. 24 is a G-G sectional view of the hinge mechanism 100 shown in FIG. 9. The second swing arms 4 of the swing arm assemblies 2 are in transmission connection via an even number of gears 7, so that the swing arm assemblies 2 connected to the two opposite sides of the base 1 move synchronously relative to the base 1 between the folding position and the unfolding position.

The even number of gears 7 are in transmission connection to the second swing arms 4 of the swing arm assemblies 2, so that when a second swing arm 4 of a swing arm assembly 2 on one side rotates at a specific angle relative to the base 1, the second swing arm 4 may transfer power to a second swing arm 4 of a swing arm assembly 2 on the other side via the even number of gears 7, to enable the second swing arm 4 of the swing arm assembly 2 on the other side to rotate at a same angle relative to the base 1. This implements synchronous rotation of the second swing arms 4 on the two sides relative to the base 1, and implement synchronous motion of the swing arm assemblies 2 relative to the base 1.

In some embodiments, as shown in FIG. 24, there are four gears 7 in transmission connection to the second swing arms 4, the four gears 7 are capable of being rotatively connected to the base 1 separately, and two adjacent gears 7 are meshed with each other. Two outermost gears 7 are respectively fastened to corresponding second swing arms 4.

A quantity of gears 7 in transmission connection to the second swing arms 4 is not limited to four, or may be two, six, eight, or the like. This may be specifically determined according to an actual situation. When there are two gears 7, each gear 7 is fastened to a corresponding second swing arm 4. The gear 7 fastened to the second swing arm 4 may be of an integrated structure (as shown in FIG. 24) with the second swing arm 4, or may be disposed separately with the second swing arm 4. This may be specifically determined according to an actual situation.

The even number of gears 7 in transmission connection to the second swing arms 4 may be incomplete gears, or may be complete gears, or may be a combination of an incomplete gear and a complete gear. This is not specifically limited herein. For example, as shown in FIG. 24, in the four gears 7, two outermost gears 7 are incomplete gears, and two gears 7 located in the middle are complete gears.

The incomplete gear means that teeth and tooth slots are distributed on a part of a circumferential surface of the gear 7 in a circumferential direction. The complete gear means that teeth and tooth slots are distributed on the entire circumferential surface of the gear 7 in the circumferential direction.

A type of a sectional line in the accompanying drawings of this application is used to distinguish between different components, and should not be understood as a limitation on a component material. The accompanying drawings of this application are intended to show structural composition, and are not shown according to a proportion of an actual product.

Although this application is described with reference to some embodiments, it does not mean that a characteristic of this application is limited only to this implementation. On the contrary, a purpose of describing this application with reference to an implementation is to cover another option or modification that may be derived based on claims of this application. To provide an in-depth understanding of this application, the foregoing descriptions include many specific details. This application may be alternatively implemented without using these details. In addition, to avoid confusion or blurring a focus of this application, some specific details are omitted from the description. It should be noted that embodiments in this application and the features in embodiments may be mutually combined in the case of no conflict.

In embodiments of this application, the terms "first", "second", and "third" are used only for describing purposes, and cannot be understood as an indication or implication of relative importance or an implication of a quantity of indicated technical features. Therefore, the features defined with "first", "second", and "third" may explicitly or implicitly include one or more of the features.

The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In the descriptions of embodiments of this application, it should be noted that terms "installation" and "connection" should be understood in a broad sense unless there is a clear stipulation and limitation. For example, "connection" may be a detachable connection, a nondetachable connection, a direct connection, or an indirect connection through an intermediate medium. The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application. "A plurality of" means at least two.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A hinge mechanism, used in a foldable electronic device, and comprising a base (1) and swing arm assemblies (2) connected to the base (1), and the swing arm assemblies (2) are capable of moving relative to the base (1) between an unfolding position and a folding position;
the swing arm assembly (2) comprises a first swing arm (3), a second swing arm (4), a support plate (5), and a connection member (6), wherein both the first swing arm (3) and the second swing arm (4) are capable of being rotatively connected to the base (1), the connection member (6) is slidably connected to the first swing arm (3), a front face (51) of the support plate (5) is used for disposing a display (200) of the foldable electronic device, a back face (52) of the support plate (5) is capable of being rotatively connected to the connection member (6), and the back face (52) of the support plate (5) is further slidably connected to the first swing arm (3);
a sliding part (41) and a first stop part (42) are disposed on the second swing arm (4), the sliding part (41) is located on a back side of the support plate (5), the connection member (6) is capable of sliding relative to the sliding part (41) along a direction of approaching and being away from the base (1), and the first stop part (42) is disposed at an end part that is of the second swing arm (4) and that is close to the base (1), and is configured to stop the support plate (5) at a position of the first stop part (42); and
a first avoidance slot (43) for avoiding the connection member (6) is formed between the first stop part (42) and the sliding part (41), a second stop part (44) is further disposed at a position of the first avoidance slot (43), and the second stop part (44) is configured to stop the support plate (5), to prevent the support plate (5) from being inserted into the first avoidance slot (43).

2. The hinge mechanism according to claim 1, wherein
both the first stop part (42) and the sliding part (41) protrude from a first side face (40) of the second swing arm (4), the second stop part (44) is disposed between the first avoidance slot (43) and the first side face (40), and the first stop part (42), the second stop part (44), and the sliding part (41) enclose the first avoidance slot (43); and
a flange (53) is disposed at an edge of one side that is of the support plate (5) and that is close to the base (1), the flange (53) is configured to press against the first stop part (42), and a distance L1 from an end part that is of the flange (53) and that is close to the first side face (40) to the first side face (40) is less than a distance L2 between the first avoidance slot (43) and the first side face (40).

3. The hinge mechanism according to claim 2, wherein
one side that is of the first stop part (42) and that is close to the support plate (5) is provided with a first stop face (421), one side that is of the second stop part (44) and that is close to the support plate (5) is provided with a second stop face (441), and the second stop face (441) is flush with the first stop face (421).

4. The hinge mechanism according to claim 3, wherein
the second stop part (44) is further provided with a bottom face (442) disposed back to the second stop face (441), and the bottom face (442) is flush with one end that is of the sliding part (41) and that is close to the base (1).

5. The hinge mechanism according to any one of claims 2 to 4, wherein
the second stop part (44) is fastened to the first side face (40).

6. The hinge mechanism according to any one of claims 2 to 5, wherein
a chamfer (431) is disposed at an edge of one end that is of the first avoidance slot (43) and that is close to the first side face (40).

7. The hinge mechanism according to any one of claims 2 to 6, wherein
along a length direction (Y) of the base (1), the first side faces (40) are respectively located at edges of two opposite ends of the second swing arm (4), and both the first stop part (42) and the sliding part (41) are disposed at each first side face (40); and
a plurality of flanges (53) are disposed on the support plate (5), the plurality of flanges (53) are arranged along the length direction (Y) of the base (1), and each flange (53) is configured to press against a corresponding first stop part (42).

8. The hinge mechanism according to any one of claims 1 to 6, wherein
the first stop part (42), the second stop part (44), and the sliding part (41) are of an integrated structure.

9. The hinge mechanism according to any one of claims 1 to 8, wherein
a first accommodating slot (61) is disposed on the connection member (6), the second swing arm (4) extends into the first accommodating slot (61), an edge of at least one side of the first accommodating slot (61) is provided with a first sliding slot (62), one end of the first sliding slot (62) is close to the base (1), the other end is away from the base (1), and the sliding part (41) and the first sliding slot (62) are slidingly cooperated.

10. The hinge mechanism according to any one of claims 1 to 9, wherein
a second accommodating slot (63) and a second sliding slot (64) are disposed on the connection member (6), the second accommodating slot (63) is provided for an end part that is of the first swing arm (3) and that is away from the base (1) to extend into, the second sliding slot (64) is located at an edge of at least one side of the second accommodating slot (63), the second sliding slot (64) is provided with a first end (c1) disposed close to the support plate (5) and a second end (c2) disposed away from the support plate (5), a distance from the first end (c1) to a rotation center of the first swing arm (3) is greater than a distance from the second end (c2) to the rotation center of the first swing arm (3); and
a sliding protrusion part (31) is disposed on the end part that is of the first swing arm (3) and that is away from the base (1), and the sliding protrusion part (31) and the second sliding slot (64) are slidingly cooperated, so that the connection member (6) is slidably connected to the first swing arm (3).

11. The hinge mechanism according to any one of claims 1 to 10, wherein
a first arc-shaped plate (54) is disposed on the back face (52) of the support plate (5), a first arc-shaped slot (65) is disposed on the connection member (6), along the length direction (Y) of the base (1), the first arc-shaped plate (54) is located at an end part of the support plate (5), and the first arc-shaped plate (54) and the first arc-shaped slot (65) are slidingly cooperated, so that the back face (52) of the support plate (5) is capable of being rotatively connected to the connection member (6).

12. The hinge mechanism according to any one of claims 1 to 11, wherein
a sliding slot member (55) is disposed on the back face (52) of the support plate (5), a third sliding slot (551) is disposed on the sliding slot member (55), the third sliding slot (551) is inclined relative to a thickness direction (H) of the support plate (5), the third sliding slot (551) is provided with a first slot end (c3) disposed close to the base (1) and a second slot end (c4) disposed away from the base (1), and a distance from the first slot end (c3) to the support plate (5) is greater than a distance from the second slot end (c4) to the support plate (5); and
a sliding accessory (32) is disposed on the first swing arm (3), and the sliding accessory (32) and the third sliding slot (551) are slidingly cooperated, so that the back face (52) of the support plate (5) is slidably connected to the first swing arm (3).

13. The hinge mechanism according to claim 12, wherein
a second avoidance slot (33) is disposed on the first swing arm (3), the second avoidance slot (33) penetrates the first swing arm (3), the sliding slot member (55) penetrates the second avoidance slot (33), the sliding accessory (32) is a shaft, and two ends of the sliding accessory (32) are respectively connected to slot walls on two opposite sides of the second avoidance slot (33).

14. The hinge mechanism according to any one of claims 1 to 13, wherein
a second arc-shaped plate (34) is disposed on the first swing arm (3), a second arc-shaped slot (11) is disposed on the base (1), the base (1) comprises a base (1) body and a fastening member (13) detachably connected to the base (1) body, and the second arc-shaped slot (11) is formed between the base (1) body and the fastening member (13), the second arc-shaped plate (34) and the second arc-shaped slot (11) are slidingly cooperated, so that the first swing arm (3) is capable of being rotatively connected to the base (1).

15. The hinge mechanism according to any one of claims 1 to 14, wherein
two opposite sides of the base (1) are respectively connected to the swing arm assemblies (2), and the second swing arms (4) of the swing arm assemblies (2) are in transmission connection via an even number of gears (7), so that the swing arm assemblies (2) connected to the two opposite sides of the base (1) move synchronously between the folding position and the unfolding position.

16. A foldable electronic device, comprising a display (200), at least two housings (300), and the hinge mechanism (100) according to any one of claims 1 to 15, wherein the housings (300) are configured to bear the display (200), the hinge mechanism (100) is located at a joint of two adjacent housings (300), and a pair of swing arm assemblies (2) of the hinge mechanism (100) are connected to the corresponding housings (300) respectively.
